# EUROPEAN PATENT SPECIFICATION

(11) **EP 4 092 666 B1**
(45) Date of publication and mention of the grant of the patent: **18.11.2026**
(21) Application number: 20913334.7
(22) Date of filing: 28.12.2020
(51) Int. Cl.: G06N 3/047, G06N 3/045, G06N 3/0475, G06N 3/088, G10G 1/00, G10H 1/00

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS, ET PROGRAMME

(30) Priority: 14.01.2020 JP 2020003795
(43) Date of publication of application: 23.11.2022
(73) Proprietor: Sony Group Corporation, Tokyo 108-0075 (JP)
(72) Inventor: AKAMA, Taketo, Tokyo 141-0022 (JP)
(74) Representative: 2SPL Patentanwälte PartG mbB
(86) International application number: PCT/JP2020/049097
(87) International publication number: WO 2021/145213

(56) References cited:
- WO-A1-2017/098760
- GINO BRUNNER ET AL: "MIDI-VAE: Modeling Dynamics and Instrumentation of Music with Applications to Style Transfer", ARXIV.ORG, CORNELL UNIVERSITY LIBRARY, 201 OLIN LIBRARY CORNELL UNIVERSITY ITHACA, NY 14853, 20 September 2018 (2018-09-20), XP080919350
- GA\"ETAN HADJERES ET AL: "DeepBach: a Steerable Model for Bach chorales generation", ARXIV.ORG, CORNELL UNIVERSITY LIBRARY, 201 OLIN LIBRARY CORNELL UNIVERSITY ITHACA, NY 14853, 3 December 2016 (2016-12-03), XP080736572
- IAN SIMON ET AL: "Learning a Latent Space of Multitrack Measures", ARXIV.ORG, CORNELL UNIVERSITY LIBRARY, 201 OLIN LIBRARY CORNELL UNIVERSITY ITHACA, NY 14853, 1 June 2018 (2018-06-01), XP080885987
- RUIHAN YANG; DINGSU WANG; ZIYU WANG; TIANYAO CHEN; JUNYAN JIANG; GUS XIA: "Deep Music Analogy via Latent Representation Disentanglement", ARXIV, 20 October 2019 (2019-10-20), pages 1 - 8, XP081374980, Retrieved from the Internet <URL:https://arxiv.org/pdf/1906.03626.pdf>
- JAHYA BURKE , YISHENG JI , SHIWEI RONG , SHUANGCHENG YANG AND ALAN YESSENBAYEV: "Music Composition using an Autoencoder Network", ECE 271B PROJECT, 2019, pages 1 - 6, XP055843498, Retrieved from the Internet <URL:https://www.yessenbayev.com/static/pdf/MusicCompositionPaper.pdf>

## Description

### TECHNICAL FIELD

The present disclosure relates to an information processing apparatus, an information processing method, and a program, and more particularly, to an information processing apparatus, an information processing method, and a program which make it possible to adjust commonness and eccentricity of automatically generated content while satisfying reality.

### BACKGROUND ART

Information processing using machine learning is utilized in various technical fields. For example, a technique has been proposed in which new content is automatically generated by learning features of content (such as images and music) by using a neural network that simulates a mechanism of a cranial nervous system.

For example, a technique has been proposed which enables automatic composition of an appropriate song suitable for lyrics by learning features of an existing song even when a user does not input parameters other than the lyrics (see Patent Document 1).

With this technique, the language feature amount calculated from the lyrics data indicating the lyrics of each song and the attribute data indicating the attribute of the song are learned, so that when new lyrics data is given, a song matching the new lyrics data can be automatically generated.

Furthermore, GINO BRUNNER ET AL: "MIDI-VAE: Modeling Dynamics and Instrumentation of Music with Applications to Style Transfer",ARXIV.ORG, CORNELL UNIVERSITY LIBRARY, 201 OLIN LIBRARY CORNELL UNIVERSITY ITHACA, NY 14853, 20 September 2018 (2018-09-20), teaches a neural network model based on Variational Autoencoders that is capable of handling polyphonic music with multiple instrument tracks, as well as modeling the dynamics of music by incorporating note durations and velocities.

### CITATION LIST

### PATENT DOCUMENT

Patent Document 1: Japanese Patent Application Laid-Open No. 2011-175006

### SUMMARY OF THE INVENTION

### PROBLEMS TO BE SOLVED BY THE INVENTION

However, the technique described in Patent Document 1 only generates melodies and chords according to the lyrics, and there is a possibility that the generated music is excessively common or excessively eccentric.

When the generated music is common, there is a possibility that the generated music lacks fun, and when the generated music is eccentric, there is a possibility that preferences are divided. Moreover, when the generated music is excessively eccentric, there is a possibility that the generated music cannot be recognized as music and lacks reality as music.

In this regard, it is conceivable to adjust the generated music to be intermediate between commonness and eccentricity, but it is difficult to implement the adjustment for an intermediate between commonness and eccentricity.

This is not limited to the automatically generated music, and the same applies to a case where various contents such as images and sentences are automatically generated.

The present disclosure has been made in view of such a situation, and in particular, an objective of the present disclosure is to make it possible to adjust commonness and eccentricity of automatically generated content while satisfying reality.

### SOLUTIONS TO PROBLEMS

The invention is defined by the independent claim. Preferred embodiments are defined by the dependent claims.

### BRIEF DESCRIPTION OF DRAWINGS

Fig. 1 is a diagram for explaining an outline of the present disclosure.
Fig. 2 is a diagram for explaining a configuration example of an information processing apparatus of the present disclosure.
Fig. 3 is a diagram for explaining functions implemented by the information processing apparatus of Fig. 2 in a first embodiment.
Fig. 4 is a diagram for explaining a real label and a fake label used for learning of a reality evaluator according to the first embodiment.
Fig. 5 is a diagram for explaining a change in a latent variable based on a likelihood and reality.
Fig. 6 is a flowchart for explaining a content generation process in the first embodiment.
Fig. 7 is a diagram for explaining functions implemented by the information processing apparatus of Fig. 2 in a second embodiment.

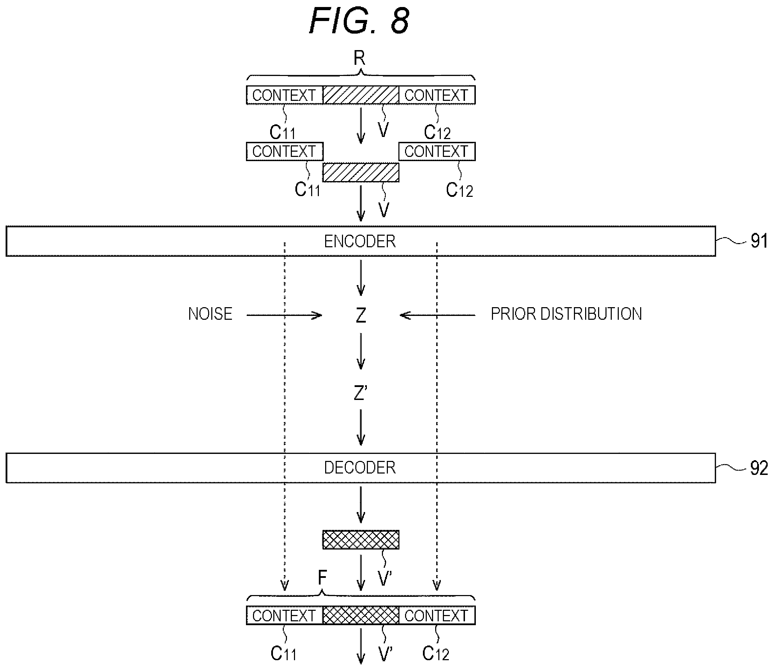

Fig. 8 is a diagram for explaining a real label and a fake label used for learning of a reality evaluator according to the second embodiment.
Fig. 9 is a flowchart illustrating a content generation process in the second embodiment.
Fig. 10 is a diagram for explaining a first modification of the present disclosure.
Fig. 11 is a diagram for explaining a second modification of the present disclosure.
Fig. 12 is a diagram for explaining a configuration example of a general-purpose personal computer.

### MODE FOR CARRYING OUT THE INVENTION

Preferred embodiments of the present disclosure will be described in detail below with reference to the accompanying drawings. Note that in this description and the drawings, components having substantially the same functional configuration are designated by the same reference numerals to omit duplicate description.

Hereinafter, modes for carrying out the present technology will be described. The description will be given in the following order.
1. Outline of present disclosure
2. First embodiment
3. Second embodiment
4. First modification
5. Second modification
6. Example of execution by software

### <<1. Outline of present disclosure>>

In particular, the present disclosure is to make it possible to adjust commonness and eccentricity of automatically generated content while satisfying reality.

When automatically generating various contents such as music, images, and sentences, the generated contents are not often generated in a satisfactory state as intended by a content creator, and there is some dissatisfaction.

The dissatisfaction of the creator with the generated content is often such that a specific part of the content generated under a certain condition is satisfied, but a part different from the specific part is not satisfied.

That is, the dissatisfaction of the creator is often such that the creator is satisfied with a specific part but remains dissatisfied with the generated content as a whole.

In such a case, the creator causes content to be automatically generated repeatedly while changing conditions until content which is satisfactory as a whole is generated, but it is rare that the content which is satisfactory as a whole is automatically generated.

Therefore, the generated content which is not satisfactory as a whole but is partially satisfactory, in other words, most of the content which causes the creator to feel regretful is discarded.

Here, an example of the most basic case of the content which causes the creator to feel regretful is that the sequence configuring the content is excessively common or excessively eccentric.

In generating content, the creator seeks content with high originality, and thus, in general, the creator does not feel originality when excessively common content which is commonplace is generated.

Therefore, there is a high possibility that the excessively common content is boring for the creator and a target person who views or listens to the content.

Conversely, when the generated content is excessively eccentric, preferences are likely to be divided although originality is felt.

Therefore, even when the creator likes content which is excessively eccentric, the content may not be accepted by the target person.

For this reason, it is required to adjust the generated content to be intermediate between commonness and eccentricity, but it is difficult to adjust the generated content to be intermediate between commonness and eccentricity.

Even when content preferred by ordinary people is investigated, a preferred labeled data set is created, a model reflecting the data set is learned, and the content is automatically generated, the preference of the ordinary people can be reflected, but there is a high possibility that commonness is increased, and the preference of the target person cannot be reflected.

In particular, in the case of being applied to an application program which automatically generates content, the preference of the generated content changes according to the purpose of use of the generated content or the target person who views or listens to the content, and thus, it is necessary to adjust the preference of the generated content.

In this regard, in the present disclosure, an intermediate between commonness and eccentricity of the generated content is adjusted using a likelihood.

Here, the likelihood is a probability that sample content can be obtained.

For example, in a case where the content is music, a probability that automatically generated music is collected sample music is set as the likelihood.

Therefore, in this case, the fact that the likelihood of the generated music is high indicates that the generated music is music close to the music collected as samples, and there is a high possibility that the generated music is commonplace music, that is, ordinary music (music with high commonness).

On the other hand, the low likelihood of the generated music indicates that the generated music is far from the music collected as samples, and is highly likely to be eccentric music (music with high eccentricity).

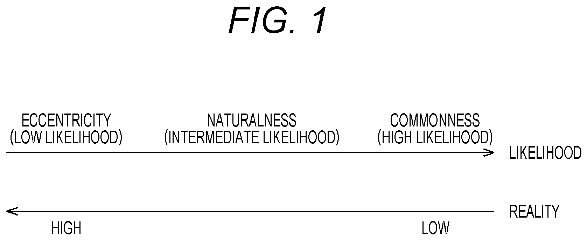

In the present disclosure, as illustrated in Fig. 1, when the likelihood of the automatically generated content is adjusted, the adjustment is made to generate content with high likelihood, thereby generating content with high commonness, and conversely, the adjustment is made to generate content with low likelihood, thereby generating content with high eccentricity.

Here, in this description, naturalness is defined as an expression indicating an intermediate degree between commonness and eccentricity of the automatically generated content.

The naturalness is used to express an intermediate degree (in likelihood) between commonness and eccentricity, and in other words, it can be said that the naturalness is an expression indicating a degree which is neither commonness nor eccentricity.

That is, in the present disclosure, it can be said that the likelihood is adjusted to suit the preference of the target person of the automatically generated content, so that the naturalness of the content is adjusted to be the intermediate degree between commonness and eccentricity.

However, when the naturalness is adjusted by adjusting the likelihood, reality decreases as the eccentricity of the generated content increases, that is, as the likelihood is adjusted to decrease.

The reality as used herein is a likelihood expressing a possibility (probability) that the generated content is content generated by a human.

For example, in a case where the content is music, a fact that the reality is reduced means that the generated music includes a discord which is not generated by a human, or a rhythm or a mode change that is difficult for a human to recognize as music.

That is, as the reality decreases, the automatically generated content becomes closer to content which is not generated by a human, and the target person who views or listens to the content cannot recognize the content or feels uncomfortable in some cases.

In this regard, in the present disclosure, when input content is changed stepwise while the naturalness which is intermediate between commonness and eccentricity is adjusted using likelihood exploration, the content is changed finally to the content desired by the user, thereby automatically generating the content.

At this time, in the automatic generation of content, as illustrated in Fig. 1, when the reality is set to increase although the content is excessively eccentric, adjustment is performed such that the reality is maintained, and content (content which cannot be recognized as content by a human) which is not generated by a human is not generated.

As a result, in the present disclosure, it is possible to automatically generate content while adjusting the naturalness which is intermediate between commonness and eccentricity by using likelihood exploration while keeping the reality satisfied.

### <<2. First embodiment>>

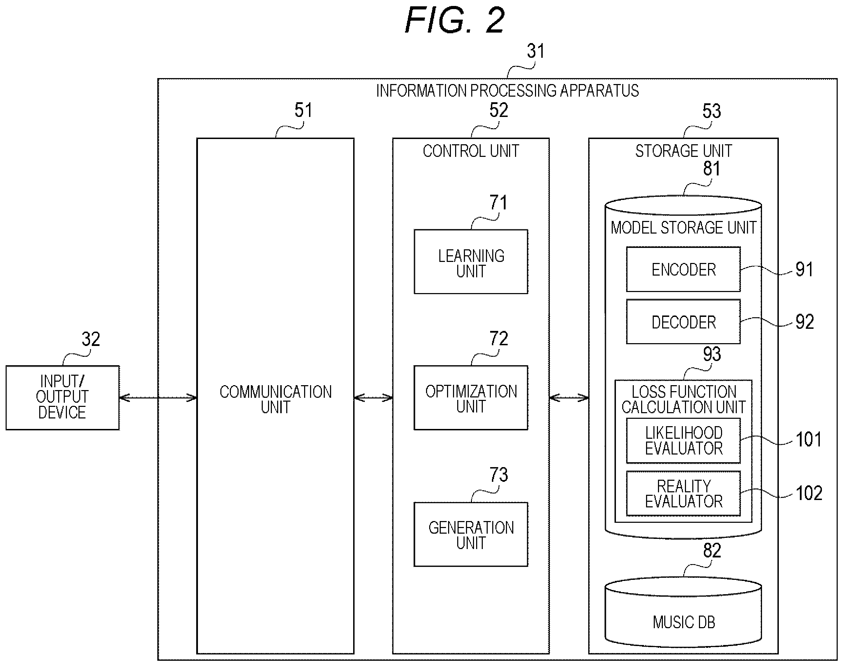

Next, a configuration of an information processing apparatus 31 which is a hardware configuration example of an information processing apparatus of the present disclosure will be described with reference to Fig. 2.

Note that, in this description, a case where the information processing apparatus 31 automatically generates music as content will be described as an example. However, the same applies to a case where the information processing apparatus automatically generates various types of content, such as images and sentences, other than music.

As illustrated in Fig. 2, the information processing apparatus 31 includes a communication unit 51, a control unit 52, and a storage unit 53. Note that the information processing apparatus 31 includes an input/output unit 32 which includes, for example, a keyboard, a mouse, or the like which receives various operations from an administrator or the like who manages the information processing apparatus 31 and, for example, a liquid crystal display or the like which presents various types of information.

The communication unit 51 is implemented by, for example, a network interface card (NIC) or the like. The communication unit 51 is connected to a network including the Internet or the like in a wired or wireless manner, and transmits and receives information to and from another device or the like via the network.

The control unit 52 includes a memory and a processor, and controls the entire operation of the information processing apparatus 31.

More specifically, the control unit 52 includes a learning unit 71, an optimization unit 72, and a generation unit 73.

The learning unit 71 causes an encoder 91 and a decoder 92 stored in a model storage unit 81 in the storage unit 53 (described later) to learn a variational auto encoder (VAE) by using music data stored as samples in a music DB 82 and to be configured as a learned model.

The optimization unit 72 is controlled by the learning unit 71 to adjust and optimize the parameters of the encoder 91 and the decoder 92 such that a posterior distribution is regularized with a prior distribution (normal distribution) while the reconfiguration error is minimized when the encoder 91 and the decoder 92 repeat learning using the music data stored as samples in the music DB 82.

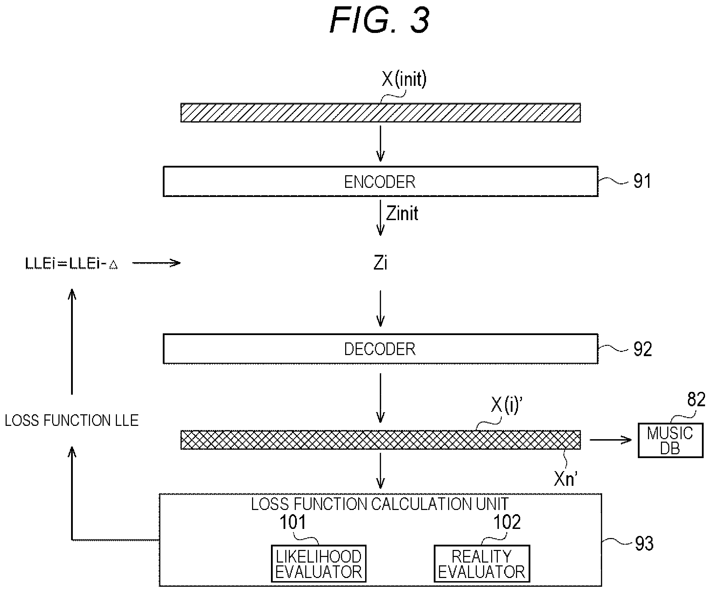

The generation unit 73 controls the encoder 91, the decoder 92, and a loss function calculation unit 93 stored in the model storage unit 81 in the storage unit 53 to adjust the naturalness of the content, which is intermediate between the commonness and the eccentricity of the input content (music), by the likelihood exploration and convert the content into the content (music) desired by the user, thereby generating (automatically generating) the content (music). Note that the automatic generation of the content by the generation unit 73 will be described later in detail with reference to Fig. 3.

The storage unit 53 is implemented by, for example, a semiconductor memory element such as a random access memory (RAM) and a flash memory, or a storage device such as a hard disk and an optical disk. The storage unit 53 includes the model storage unit 81 and the music database (DB) 82.

The model storage unit 81 stores a learned model learned in advance. Specifically, the model storage unit 81 includes the encoder 91 that extracts a latent variable which is a feature amount from the content, the decoder 92 that reconfigures the content on the basis of the latent variable, and the loss function calculation unit 93 that calculates a loss function which is a difference between the likelihood of the content as input data and the likelihood desired by the user.

The music DB 82 stores data regarding content (music) as a sample input to the model. The music DB 82 also stores content which the generation unit 73 controls the encoder 91 and the decoder 92 to generate (automatically generate).

### <Automatic generation of content by generation unit>

Next, the automatic generation of content by the generation unit 73 will be described with reference to Fig. 3.

The generation unit 73 controls the encoder 91 and the decoder 92 learned in advance, and causes the encoder 91 to encode content (music) X(init) as input data to obtain a latent variable Zinit. Then, the generation unit 73 causes the decoder 92 to perform reconfiguration on the basis of the obtained latent variable Zinit, thereby generating content (music) X(init)' as output data.

More specifically, as illustrated in Fig. 3, for example, the encoder 91 encodes content (music) X(init) including a sequence such as partial data including a plurality of bars or the like, thereby converting the content into the latent variable Zinit as a feature amount including a vector or the like having a smaller number of dimensions than the content (music) X.

Then, as illustrated in Fig. 3, the decoder 92 decodes each piece of latent variable on the basis of the latent variable Zinit which is the feature amount of the content to return to the original dimension and restores the latent variable to be reconfigured as the content (music) X(init)' including a sequence such as partial data including bars.

Here, the encoder 91 and the decoder 92 are controlled by the learning unit 71 to be subject to unsupervised learning by the VAE in advance. The encoder 91 is configured to encode the content (music) Xinit which is input data to convert the content into the latent variable Zinit, and the decoder 92 is configured to be able to reconfigure the content as the content (music) X(init)' on the basis of the latent variable Zinit. That is, since the encoder 91 and the decoder 92 are learned, the content X(init) and the content X(init)' are substantially the same.

When receiving the information of the likelihood indicating the degree of naturalness which is desired by the creator of the content (music) and intermediate between commonness and eccentricity, the generation unit 73 controls the loss function calculation unit 93 to calculate, as a loss function LLE, a difference between the likelihood of the content (music) X(init)' reconfigured by the decoder 92 and the likelihood desired by the creator.

Then, the generation unit 73 changes a latent variable Zi (i is the number of times of lowering the loss function LLE) to gradually lower the obtained loss function LLE by a predetermined value Δ, that is, to reduce the loss function LLE stepwise and causes the decoder 92 to perform decoding, thereby gradually generating the content (music) X(i)' having the likelihood desired by the creator.

For example, as indicated by following Formula (1), the loss function LLE is a function indicating a difference in likelihood between the content X(init)' reconfigured from the latent variable Zinit obtained from the content X(init) which is the input data and the content of the desired likelihood, and includes a function F1 configuring a term relating to the difference in likelihood of the content and a function F2 configuring a term relating to the likelihood of the reality of the content.
$LLE = F 1 - α \times F 2$ (1)

Here, LLE is a loss function, F1 is the function configuring a term relating to the likelihood of the content, F2 is the function configuring a term relating to the likelihood of reality, and α is a predetermined coefficient and can be arbitrarily set.

More specifically, the loss function calculation unit 93 includes a likelihood evaluator 101 and a reality evaluator 102, calculates the function F1 configuring a term relating to the likelihood of the content on the basis of the likelihood calculated by the likelihood evaluator 101, and calculates the function F2 configuring a term relating to the likelihood of the reality on the basis of the likelihood of the reality of the content calculated by the reality evaluator 102.

On the basis of a sequence generation model (language generation model), the likelihood evaluator 101 performs learning, for example, by RNN, Transformer, or the like as architecture to maximize a log likelihood, and obtains the likelihood of reconfigured content (music) X' as the log likelihood.

Here, the likelihood of the reconfigured content X' is a probability that the reconfigured content X' is music registered as a sample in the music DB 82.

More specifically, in a case where the reconfigured content (music) X' is configured as sequence data X' (X1', X2', ..., Xn') such as partial data X1', X2', ..., Xn', the likelihood of the content X' is expressed as a product of respective probabilities of the partial data.

For example, in a case where the likelihood (probability) of the music X' is expressed by P(X'), the likelihood (probability) P(X') of the music X' is calculated as following Formula (2).

Note that, in the case of the sequence data X' (X1', X2', ..., Xn'), an initial value Start is input to generate the head partial data X1', the partial data X1' is input to generate the adjacent partial data X2', the partial data X2' is input to generate the adjacent partial data X3', ..., the partial data X(n-1)' is input to generate the adjacent partial data Xn'.

Therefore, the likelihood (probability) P(X') of the content X' including this sequence data (X1', X2', ..., Xn') is expressed as following Formula (2).
$\begin{matrix}P \left(X′\right) = P \left(X1′\left|Start\right.\right) \\ \times P \left(X2′\left|Start, X1′\right.\right) \\ \times P \left(X3′\left|Start, X1′, X2′\right.\right) \\ \times P \left(X4′\left|Start, X1′, X2′, X3′\right.\right) \\ \times P \left(X5′\left|Start, X1′, X2′, X3′, X4′\right.\right) \\ … … \\ \times P \left(Xn′\left|Start, X1′, X2′, …, X\left(n-1\right)′\right.\right)\end{matrix}$ (2)

Here, P(X') is the likelihood (probability) of the content (music) X'.

Furthermore, P(Xn'|Start, X1', X2', ..., X(n-1)') is a conditional probability (likelihood) of the partial data Xn' when the initial value is Start and the partial data are sequentially X1', X2', ..., X(n-1)'.

The likelihood evaluator 101 logarithmizes the likelihood P(X') of the content (music) X' obtained in this way, and outputs the result as a log likelihood EL(X') .

Furthermore, the reality evaluator 102 performs learning in advance, for example, by RNN, Transformer, or the like as architecture to maximize the log likelihood indicating reality on the basis of content including a sequence labeled with a real class including the content generated by a human as an input and content including a sequence labeled with a fake class which is not generated by a human.

Then, the reality evaluator 102 obtains the likelihood of the reality of the content (music) X(init)' as a function of the term relating to the likelihood of the reality and logarithmically obtains the log likelihood of the reality as reality ER(X').

Note that, hereinafter, the likelihood indicating the probability that the reconfigured content (music) X' is music data registered as a sample in the music DB 82 is referred to as "likelihood", and the likelihood of reality is simply referred to as "reality" for distinction although the likelihood of reality is still a likelihood as a concept, but there is no change in that both are likelihoods.

Here, the content which is the sequence labeled with the real class is, for example, music data which is used for learning and is a sample registered in the music DB 82.

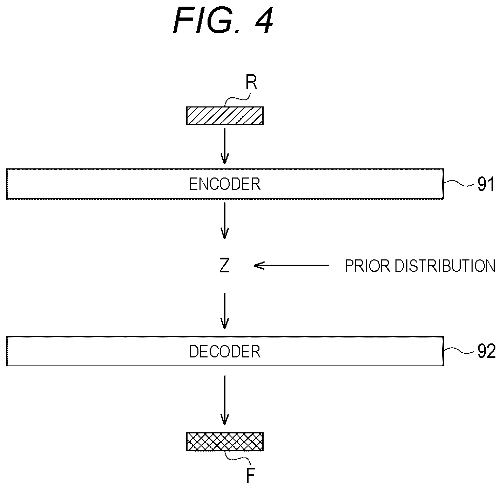

Furthermore, the content including the sequence labeled with the fake class is, for example, music data F reconfigured when the latent variable Z obtained from the prior distribution by the VAE relating to the learning of the encoder 91 and the decoder 92 is decoded by the decoder 92 as illustrated in Fig. 4.

That is, the reality evaluator 102 performs learning on the basis of a group of content R including the sequence labeled with the real class generated as illustrated in Fig. 4 and a group of content F including the sequence labeled with the fake class, and obtains, as reality ER(X(init)'), the log likelihood obtained by logarithmizing the likelihood which is the probability that the reconfigured content (music) X(init)' is the content generated by a human.

The loss function calculation unit 93 calculates a loss function LLEinit expressed by above-described Formula (1) from the likelihood (log likelihood) EL(X(init)') of the reconfigured content X' calculated by the likelihood evaluator 101 and the reality (log likelihood) ER(X(init)') as the probability that the reconfigured content X' calculated by the reality evaluator 102 is the content generated by a human.

More specifically, the loss function calculation unit 93 calculates a term, which is the function F1 of Formula (1), relating to the likelihood of the reconfigured content X' as represented by following Formula (3).
$F 1 = {\left(EL\left(X\left(init\right)′\right)-β\times ELinit\right)}^{2}$ (3)

Here, F1 is a function indicating a term relating to the likelihood of the reconfigured content X(init)' in Formula (1), EL(X(init)') is the log likelihood of the reconfigured content X(init)' obtained by the likelihood evaluator 101, and β×ELinit is a reference likelihood.

The reference likelihood β×ELinit is a value for setting the likelihood desired by the creator who tries to automatically generate the content, that is, a value which is the aim of the likelihood to be finally obtained, and is expressed as a product of a coefficient β and an initial value ELinit (predetermined fixed value) of the likelihood.

For example, when it is desired to increase the likelihood of the content X(init) which is the input data and reconfigure (automatically generate) content having increased commonness, the reference likelihood is set to be larger than the initial value ELinit of the likelihood, and thus, the coefficient β is set to a value larger than 1. Furthermore, in a case where there is no specific desired likelihood and it is simply desired to increase the likelihood, the coefficient β may be set to a specific value larger than 1, for example, 1.2 or 1.5.

On the other hand, when it is desired to lower the likelihood of the content to be generated automatically and to increase the eccentricity, the coefficient β is set to a value smaller than 1 in order to set the reference likelihood to be smaller than the initial value ELinit of the log likelihood EL. Furthermore, in a case where there is no specific desired likelihood and it is simply desired to reduce the likelihood, the coefficient β may be set to a specific value smaller than 1, for example, 0.8 or 0.5.

Furthermore, the loss function calculation unit 93 substitutes the log likelihood ER(X(init)') of the reality of the reconfigured content X(init)' into the function F2 of above-described Formula (1) to perform calculation.

From these, the loss function calculation unit 93 calculates the loss function LLE as expressed by following Formula (4).
$\begin{matrix}LLE = F 1 - α \times F 2 \\ = {\left(EL\left(X\left(init\right)′\right)-β\times ELinit\right)}^{2} - α \times ER \left(X\left(init\right)′\right)\end{matrix}$ (4)

Note that the loss function calculation unit 93 enables differentiation by using, for example, Gumbel Softmax so that the decoder 92 can receive evaluation signals by the likelihood evaluator 101 and the reality evaluator 102.

### <Change of latent variable based on loss function>

As described above, the loss function LLE includes the function F1 depending on the difference between the likelihood (= the likelihood of the reconfigured content X(init)') of the content X(init) which is the input data and the likelihood desired by the creator, and the function F2 depending on the reality.

In this regard, the generation unit 73 reconfigures the content X(i) such that the loss function LLE becomes small, thereby generating the content having the likelihood desired by the creator.

That is, since the loss function LLE has a configuration as expressed in Formula (4), the generation unit 73 increases the reality ER and causes the likelihood EL to approach the reference likelihood, thereby reconfiguring the content in which the loss function LEE becomes small.

More specifically, on the basis of the loss function LLE described above, the generation unit 73 changes the latent variable Zi to stepwise reduce the loss function by the predetermined value Δ, and causes the decoder 92 to decode the changed latent variable Zi, thereby sequentially generating new content X' (i).

In this regard, next, a method of changing the latent variable Zi by reducing the loss function will be described.

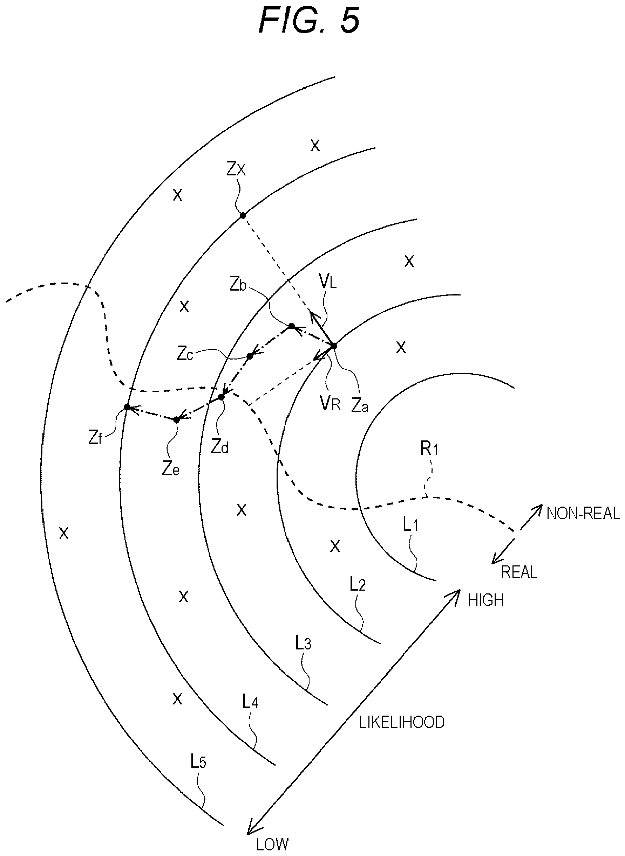

For example, as illustrated in Fig. 5, it is considered that the latent variable Z obtained on the basis of the content which is various inputs is defined as a latent variable space expressed in a two-dimensional space, and the likelihood of the content at the time of reconfiguration using each latent variable Z is expressed by a contour line in the latent variable space.

Note that, in the latent variable space of Fig. 5, an example in which the latent variable Z is set to two dimensions for the sake of explanation will be described, but in reality, the latent variable Z is configured with more dimensions, and the latent variable space is similarly expressed with more dimensions.

That is, in the latent variable space of Fig. 5, the distribution of the latent variable Z expressed two-dimensionally is indicated by a cross mark, and the likelihood when the content is reconfigured using each latent variable Z is indicated by solid lines L1 to L5 concentrically, and is set to have a distribution in which the likelihood decreases toward the outside of a paper surface. That is, the likelihoods indicated by the solid lines L1 to L5 are assumed to satisfy L1 > L2 > L3 > L4 > L5 in the drawing. Note that the distribution of the likelihood in the latent variable space of Fig. 5 is an example.

Furthermore, in the latent variable space of Fig. 5, when the reality when the content is reconfigured using the similar latent variable Z is obtained, the distribution of a predetermined threshold of the reality is indicated by a dotted line R1.

Here, an upper portion from the dotted line R1 in the drawing is a non-real region in which the reality is lower than the predetermined threshold, and the reconfigured content is regarded as "non-real" which is hardly recognized as the content generated by a human.

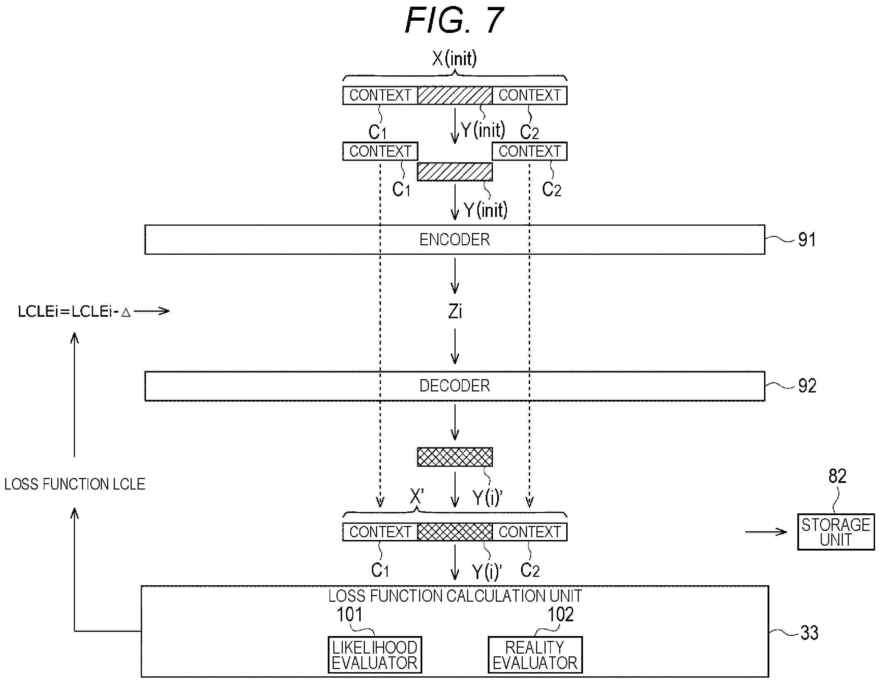

Moreover, in the latent variable space of Fig. 7, it is assumed that a lower portion from the dotted line R1 is a real region which is a region where the reality is higher than the predetermined threshold, and the reconfigured content is regarded as "real" which is recognized as the content generated by a human.

Note that the reality in the latent variable space of Fig. 5 is also to be displayed with a plurality of contour lines similarly to the likelihood, but here, only the dotted line R1, which is the distribution of the predetermined threshold which is a boundary between the real region and the non-real region, is displayed.

Here, for example, a case will be considered in which the latent variable generated when content Xa which is the input data is encoded by the encoder 91 is represented by a position Za in the latent variable space of Fig. 5, and the creator desires to lower the likelihood from the current level of the solid line L2 to the level of the solid line L4.

When it is not necessary to be aware of reality, the generation unit 73 moves the position in the latent variable space toward the solid line L4 in a vector VL direction perpendicular to the solid line L2 which is the contour line representing the level of likelihood in the latent variable space of Fig. 5 to obtain the latent variable, and causes the decoder 92 to decode the latent variable, whereby it is possible to reconfigure the content of the likelihood desired by the creator.

That is, in the latent variable space, it can be said that latent variables existing at close positions are similar latent variables, and thus the latent variable obtained at a position Zx which is closest on the solid line L4 as viewed from the position Za at which the likelihood level is on the solid line L2 is considered to be the latent variable, which is most similar to the latent variable at the current position Za, of the likelihood represented by the solid line L4.

However, in the case of considering reality, in Fig. 7, the region where the latent variable Za exists is a non-real region, and thus there is a possibility that the content reconfigured by decoding the latent variable, which is obtained by moving the position in the latent variable space in consideration of only the likelihood, by the decoder 92 has low reality although the likelihood is satisfied, and the content cannot be recognized as the content generated by a human when the target person views or listens to the content.

In this regard, the generation unit 73 sets a vector VR of reality in a direction in which the position Za in the latent variable space is closest to the dotted line R1, moves the position Za to a position Zb, which is obtained by synthesizing the vector VL and the vector VR and obtained by lowering the gradient of the likelihood by the predetermined value Δ, to obtain the latent variable, and causes the decoder 92 to decode the latent variable, thereby reconfiguring new content.

The generation unit 73 sequentially outputs latent variables obtained by repeating the similar operation thereafter, for example, by sequentially changing the position Za to the positions Zb, Zc, Zd, Ze, and Zf in the latent variable space to the decoder 92, and causes the decoder to decode the latent variables to generate new content.

That is, content Xb generated by decoding the latent variable at the position Zb in the latent variable space in Fig. 7 by the decoder 92 has a reduced likelihood compared to the content Xa and is improved in reality to approach the dotted line R1 which is the boundary with the real region.

Furthermore, content Xc generated by decoding the latent variable of the position Zc by the decoder 92 has a further reduced likelihood compared to the content Xb and is further improved in reality to further approach the dotted line R1.

Moreover, the content Xd generated by decoding the latent variable at the position Zd by the decoder 92 has a further reduced likelihood compared to the content Xc and is further improved in reality, so that the content Xd enters the real region cross the dotted line R1, and becomes a state sufficient in reality.

Furthermore, content Xe generated by decoding the latent variable at the position Ze by the decoder 92 has a reduced likelihood compared to the content Xd, and since the content Xd is already sufficient in reality, the content Xe is moved in a direction close to the vertical direction with respect to the solid line L3 which is a contour line indicating the likelihood.

Moreover, the content Xf generated by decoding the latent variable at the position Zf by the decoder 92 has a reduced likelihood of compared to the content Xe, and since the content Xd is already sufficient in reality, the content Xf is moved in a substantially vertical direction with respect to the solid line L3 which is the contour line indicating the likelihood.

As described above, in the latent variable space as illustrated in Fig. 5, a processing of changing the latent variable to reduce the likelihood in the loss function LLE stepwise while improving the reality and causing decoding is repeated, whereby the content as the input data can approach stepwise to the likelihood desired by the creator while the reality is improved.

Note that, in the above description, an example has been described in which the naturalness of the content is made eccentric by stepwise reducing the likelihood of the content, which is the input data, to a desired likelihood. However, even in a case where the likelihood is made common, similar processing is performed only by setting the reference likelihood high.

Furthermore, in the above description, a process of causing the likelihood to stepwise approach to the likelihood desired by the creator has been described, but instead of the stepwise process, the latent variable may be changed to reach the desired likelihood at one time.

### <Content generation process in first embodiment>

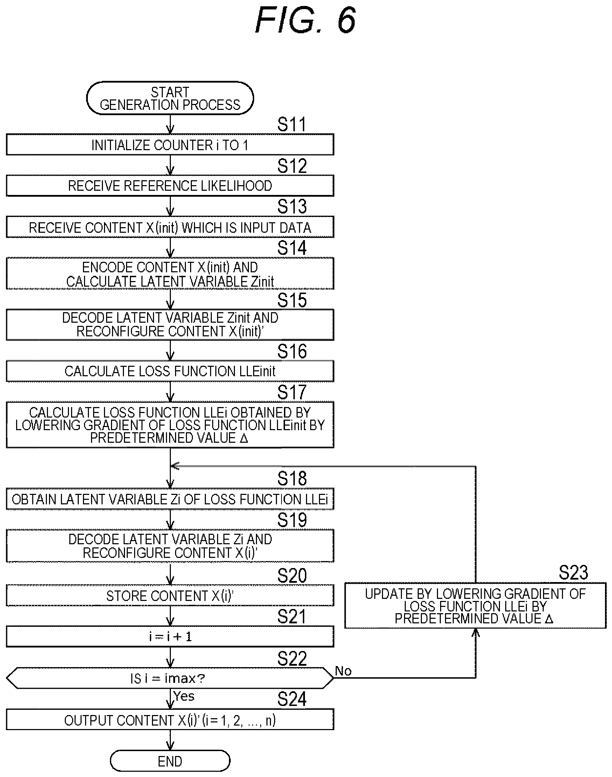

Next, a content generation process in the first embodiment will be described with reference to a flowchart in Fig. 6.

In step S11, the generation unit 73 initializes a counter i to 1.

In step S12, the generation unit 73 sets the reference likelihood. More specifically, the generation unit 73 sets the reference likelihood by, for example, receiving the value of the coefficient β in above-described Formula (4) and setting a specific value of the reference likelihood, or receiving the input of information indicating that the likelihood is desired to be increased or decreased and setting the coefficient β to a predetermined value.

In step S13, the generation unit 73 receives the input of the content X(init) which is input data.

In step S14, the generation unit 73 controls the encoder 91 to encode the partial data Xint and convert the partial data Xint into the latent variable Zinit.

In step S15, the generation unit 73 controls the decoder 92 to decode the latent variable Zinit and reconfigure the content X(init)'.

In step S16, the generation unit 73 controls the loss function calculation unit 93 to calculate the loss function LLEinit based on the difference between the likelihood of the content X(init)' and the likelihood desired by the creator by using above-described Formula (4).

In step S17, the generation unit 73 obtains a loss function LLEi obtained by lowering the loss function LLEinit by the predetermined value Δ.

In step S18, as described with reference to Fig. 5, the generation unit 73 moves the position of the latent variable Zinit in the latent variable space while reducing the likelihood with the reality maintained, such that the loss function LLEinit is lowered by the predetermined value Δ to be changed to the loss function LLEi, and obtains and updates the latent variable Zi corresponding to the position in the new latent variable space.

In step S19, the generation unit 73 controls the decoder 92 to decode the latent variable Zi and reconfigure the content X(i)'.

In step S20, the generation unit 73 stores the reconfigured content X(i)' in the music DB 82 of the storage unit 53.

In step S21, the generation unit 73 increments the counter i by 1.

In step S22, the generation unit 73 determines whether or not the counter i is a maximum value imax, and in a case where the counter i is not the maximum value imax, the processing proceeds to step S23.

In step S23, the generation unit 73 updates the loss function LLEi by lowering the loss function LLEi by the predetermined value Δ (LLEi = LLEi - Δ), and the processing returns to step S18.

At this time, in step S18, as described with reference to Fig. 5, the generation unit 73 moves and updates the position of the latent variable Zi in the latent variable space to correspond to the change in the loss function LLEi which is lowered by the predetermined value Δ to be updated, and obtains and updates a new latent variable Zi.

That is, the processes of steps S18 to S23 are repeated until the counter i reaches the maximum value imax, so that the latent variable Zi is updated while the loss function LLEi is sequentially lowered by the predetermined value Δ, and the updated latent variable Zi is sequentially decoded to generate new content Xi. As a result, the newly reconfigured content Xi is sequentially changed to gradually approach the likelihood desired by the creator while satisfying reality.

Then, in a case where it is determined in step S22 that the counter i reaches the maximum value imax, the processing proceeds to step S24.

In step S24, the generation unit 73 outputs the content X(i) (i = 1, 2, 3, ..., imax) which is output data stored in the storage unit 53.

With the above processing, it is possible to generate the content X(i)' by changing the content X(init), which is input data, stepwise to have the likelihood intended by the creator while satisfying reality.

As a result, it is possible to automatically generate content while adjusting the naturalness which is intermediate between commonness and eccentricity of the content as intended by the creator.

Note that, in the processing of Fig. 6, in the processing until the loss function LLEinit is obtained which is the difference between the likelihood in the content X(init) which is the input data and the likelihood desired by the creator, the calculation is performed after the latent variable Zinit is once decoded by the decoder 92 to obtain the content X(init)'. However, in the initial processing, no change is added to the latent variable Zinit, and thus the content Xinit and the content Xinit' are substantially the same.

Therefore, the initial loss function LLEinit may be directly obtained from the content Xinit which is the input data.

Furthermore, in the above description, an example is described in which the process of sequentially changing the latent variable Zi while stepwise lowering the loss function LLEinit by the predetermined value Δ and repeatedly reconfiguring the content X(i)' is repeated until the counter i reaches imax. However, the process may be ended when the loss function LLEi cannot be further reduced.

Moreover, in the above description, an example is described in which all the content X(i)' (i = 1, 2, ... imax) repeatedly reconfigured by stepwise lowering the loss function LLEinit is finally output, but only the content X(imax)' obtained last may be output.

Furthermore, in the function F1 including the term relating to the likelihood configuring the loss function LLE, it is only required to set the likelihood large in a case where it is only required to increase the likelihood and simply make the content common, and it is only required to set the likelihood small in a case where it is only required to reduce the likelihood and simply make the content eccentric.

Therefore, in a case where there is no final aim or the like of the likelihood, the setting may be made as in following Formula (5).
$\begin{matrix}F 1 = EL \left(X\left(init\right)\right) ′ \left(\begin{matrix}when it is desired to reduce the \\ likelihood and make the content eccentric\end{matrix}\right) \\ = - EL \left(X\left(init\right)\right) ′ \left(\begin{matrix}when it is desired to increase \\ the likelihood and make the content common\end{matrix}\right)\end{matrix}$ (5)

In other words, the function F1 may be selectively used depending on whether it is desired to be eccentric or it is desired to be common as in Formula (5). Furthermore, Formula (5) may be used by multiplying the likelihood EL(X(init)) of the content X(init) by a positive coefficient when it is desired to reduce the likelihood and make the coefficient eccentric, and may be used by multiplying the likelihood EL(X(init)) by a negative coefficient when it is desired to increase the likelihood and make the content common.

### <<3. Second embodiment>>

In the above description, an example is described in which the content X(init) which is input data is encoded to be converted into the latent variable Zinit, then the latent variable Zinit is decoded to obtain the content X(init)', the loss function LLEinit which is the difference between the likelihood of the content X(init)' and the desired likelihood is obtained, the latent variable Zi is stepwise updated while the loss function LLEi is updated by lowering by the predetermined value Δ, and the updated latent variable Zi is decoded, thereby repeatedly reconfiguring the content X(i)'.

However, in the case of the above-described processing, there is a possibility that the content X(i)' to be reconfigured is completely different from the content X(init) which is input data every time the loss function LLEi is updated.

For this reason, even when there is a favored part in the content X(init) in which the naturalness which is intermediate between commonness and eccentricity is not changed, the entire content including the favored part is changed by changing the commonness and the eccentricity, and there is a possibility that it is difficult for the creator to like the entire content.

In this regard, in the content Xinit which is input data, a part which the creator likes may be set not to be changed as context, and the naturalness which is intermediate between commonness and eccentricity may be adjusted by the likelihood exploration only for the other parts.

Note that, hereinafter, the likelihood exploration performed in a state where the part which is not changed as the context is set is also referred to as contextual likelihood exploration.

For example, in the content X(init) which is input data as illustrated in Fig. 7, the generation unit 73 receives the input regarding the information of a part which is desired not to be changed as intended by creator, and sets the part which is desired not to be changed as the context.

In the example of Fig. 7, in the content X(init), parts which the creator likes and which are desired not to be changed are set as contexts C1 and C2, and a part which is desired to be changed other than the contexts C1 and C2 is set as partial data Y(init).

Note that, although Fig. 7 illustrates an example in which the contexts C1 and C2 are set before and after the partial data Y(init) which is desired to be changed, the position at which the contexts are set may be other than this or may be two or more positions.

Then, the generation unit 73 controls the encoder 91 to encode only the partial data Y(init) which is the part which is desired to be changed and convert the partial data into the latent variable Zinit.

The generation unit 73 controls the decoder 92 to reconfigure the partial data Y(init)' on the basis of the latent variable Zinit.

The generation unit 73 integrates the reconfigured partial data Y(init) and the contexts C1 and C2 to reconfigure the content X(init)'.

Thereafter, similarly to a case where there is no context, the generation unit 73 repeats a process of calculating a loss function LCLEinit which is the difference between the likelihood of the content X(init)' and the likelihood desired by the creator, lowering by the predetermined value Δ to update a loss function LCLEi and update the corresponding latent variable Zi, controlling the decoder 92 to decode the latent variable Zi, reconfiguring partial data Y(i)', and further integrating the partial data Y(i)' with the contexts C1 and C2 to reconfigure the context X(i)'.

### <Reality evaluator in case where context is used>

In the case of using the context, as illustrated in Fig. 7, the reality evaluator 102 learns only partial data V other than the contexts C11 and C12 in the content R generated by a human by using the content F reconfigured by adding the contexts C11 and C12 to partial data V' reconfigured when the decoder 92 decodes a latent variable Z' in which a noise is added to the latent variable Z obtained from the prior distribution by the VAE relating to the learning of the encoder 91 and the decoder 92.

That is, in the case of using the context, the reality evaluator 102 sets the content R including the contexts C11 and C12 and the partial data V illustrated in Fig. 7 as the content including the sequence labeled with the real class, learns the content F reconfigured by adding the contexts C11 and C12 to the reconfigured partial data V' as the content including the sequence labeled with the fake class, and obtains, as the reality ER(X'), the log likelihood obtained by logarithmizing the likelihood which is the probability that the reconfigured content (music) X' is the content generated by a human.

### <Content generation processing in second embodiment>

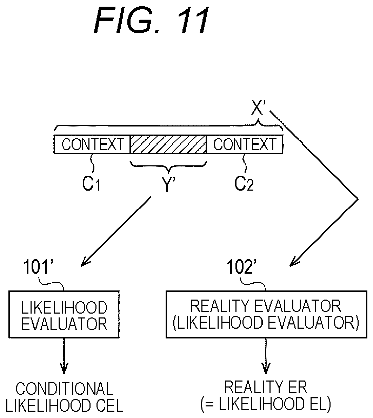

Next, a content generation process in the second embodiment will be described with reference to a flowchart in Fig. 11.

In step S51, the generation unit 73 initializes the counter i to 1.

In step S52, the generation unit 73 receives the setting of the reference likelihood.

In step S53, the generation unit 73 receives the input of the content X(init) which is input data.

In step S54, the generation unit 73 receives information of a part to be the context which is a part which the creator does not desire to change in the content X(init).

In step S55, the generation unit 73 generates the partial data Y(init) obtained by removing the part to be the context from the content X(init).

In step S56, the generation unit 73 controls the encoder 91 to encode the partial data Y(init) and convert the partial data Y(init) into the latent variable Zinit.

In step S57, the generation unit 73 controls the decoder 92 to decode the latent variable Zinit and reconfigure the partial data Y(init)'.

In step S58, the generation unit 73 integrates the partial data Y(init)' and the context to reconfigure the context X(init)'.

In step S59, the generation unit 73 controls the loss function calculation unit 93 to calculate the loss function LCLEinit of the content X(init)' by using above-described Formula (4). Note that, here, the loss function LCLEinit in a case where the context is set and the loss function LLEinit in a case where the context is not set are denoted by different reference numerals, but the configurations of the formulas are the same as Formula (4).

In step S60, the generation unit 73 obtains the loss function LCLEi obtained by lowering the loss function LCLEinit by the predetermined value Δ. Furthermore, the loss function LCLEi is basically similar to the loss function LLEi.

In step S61, when the loss function LCLEinit is lowered by the predetermined value Δ to be changed into the loss function LCLEi, the generation unit 73 moves the position of the corresponding latent variable Zinit in the latent variable space to obtain and update the latent variable Zi.

In step S62, the generation unit 73 controls the decoder 92 to decode the latent variable Zi and reconfigure the partial data Y(i)'.

In step S63, the generation unit 73 integrates the partial data Y(i)' and the context to reconfigure the content X(i)'.

In step S64, the generation unit 73 stores the reconfigured content X(i)' in the music DB 82 of the storage unit 53.

In step S65, the generation unit 73 increments the counter i by 1.

In step S66, the generation unit 73 determines whether or not the counter i is the maximum value imax, and in a case where the counter i is not the maximum value imax, the processing proceeds to step S67.

In step S67, the generation unit 73 lowers the loss function LLEi by the predetermined value Δ and updates the loss function LLEi (LLEi = LLEi - Δ), and the processing returns to step S61.

That is, the processes of steps S61 to S67 are repeated until the counter i reaches the maximum value imax, so that the latent variable Zi is changed and decoded correspondingly while the loss function LLEi is sequentially lowered by the predetermined value Δ, new partial data Y(i)' is generated, and the partial data Y(i)' is integrated with the context to repeatedly reconfigure the content X(i)'. As a result, the newly reconfigured content Xi is sequentially changed to gradually approach the likelihood desired by the creator while satisfying reality.

At this time, since no change is added to the part set as the context, the newly reconfigured content Xi sequentially changes to gradually approach the likelihood desired by the creator while retaining the part which the creator likes and keeping the reality satisfied.

Then, in a case where it is determined in step S66 that the counter i reaches the maximum value imax, the processing proceeds to step S68.

In step S68, the generation unit 73 outputs the contents X(i)' (i = 1, 2, 3, ..., imax) which is output data stored in the music DB 82 of the storage unit 53.

With the above processing, it is possible to generate the content X(i)' stepwise by the contextual likelihood exploration of changing the content X(i) which is input data to the likelihood intended by the creator while retaining the part set as the context and satisfying reality.

As a result, as intended by the creator, it is possible to automatically generate the content while retaining the favored part of the content and adjusting the naturalness which is intermediate between commonness and eccentricity only for the other part.

### <<4. First modification>>

In the above description, an example is described in which in the likelihood and the reality, one element is obtained for the entire content, and the loss function is calculated. However, since the content is a sequence including a plurality of elements, the likelihood can also be decomposed for each element, and a sequence including the likelihood for each element can be configured.

A sequence including the likelihood of each element configuring the content is referred to as a likelihood sequence (information flow).

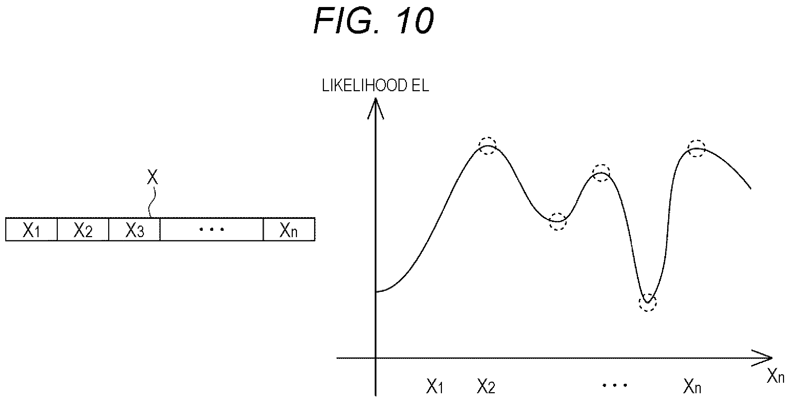

In other words, for example, in a case where the content Xinit is music, as illustrated in the left part of Fig. 10, the content Xinit includes elements X1, X2, ..., Xn which are sequences in a time direction.

Therefore, a likelihood EL(Xi) can be obtained for each element X1, X2, ..., Xn, and this becomes the likelihood sequence (information flow).

In a case where the likelihood sequence (information flow) is used, the reference likelihood is set for each element X1, X2, ..., Xn, the sum of squares of the difference between the likelihood EL(Xi) of each element and the reference likelihood is used as the function F1 in Formula (1) configuring the loss function described above, and, for example, following Formula (6) is obtained.
$F 1 = Σ {\left(EL\left(X\left(i\right)′\right)-βi\times ELinit\right)}^{2} \left(i=1, 2, …, n\right)$ (6)

Here, i (i = 1, 2, ..., n) is an identifier of each element, EL(X(i)') is the likelihood of the element Xi, βi is the coefficient of each element, and ELinit is the initial value of the likelihood.

Therefore, in Formula (6), the function F1 is expressed as the sum of squares of the difference between the likelihood EL(Xi) of each element and a reference likelihood βi×ELinit.

As illustrated in the right part of Fig. 10, it can be said that the likelihood sequence for each element is, in other words, a change in the likelihood in the time direction, that is, a change in surprise level in the time direction.

In Fig. 10, for example, the likelihood is a peak or a valley at the timing indicated by a dotted circle, and the surprising change is illustrated.

In general, in the surprise level, it is known that a small surprise occurs after a large surprise, and a large surprise occurs after a small surprise.

Therefore, a surprising change in the music can be reflected by using the likelihood sequence as illustrated in Fig. 10.

Furthermore, here, for the elements X1, X2, ..., Xn configuring the content Xinit, an element having a minimum configuration in the time direction is assumed, but a cluster including a plurality of elements may be formed, and the likelihood sequence may be set in units of clusters. Moreover, for the function F1 in Formula (1) configuring the loss function, a correlation with the reference likelihood may be used instead of the square error described with reference to Formula (6), or a statistic such as a variance for the elements of the likelihood sequence (information flow) may be used without using the reference likelihood.

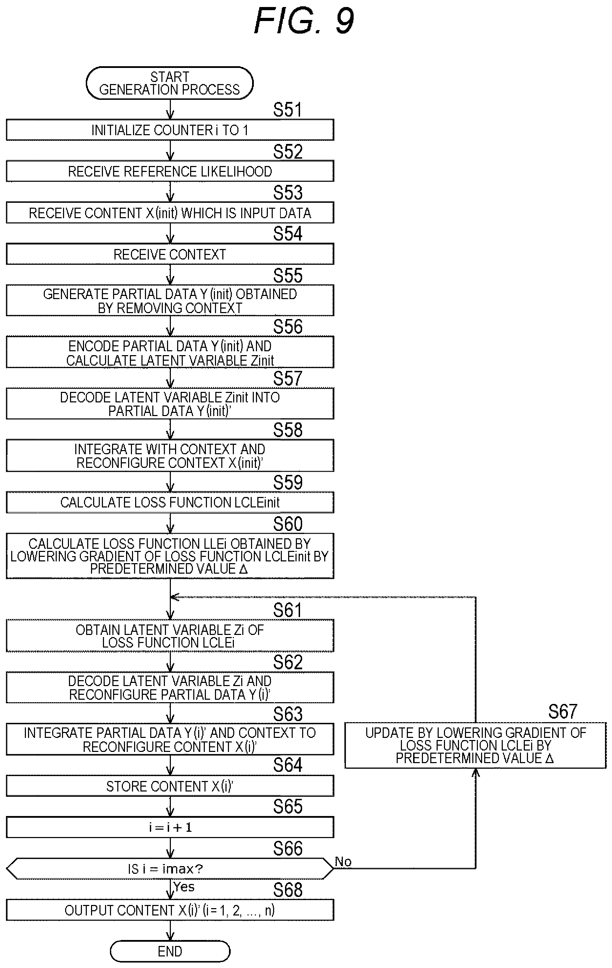

Note that the content generation process is similar to the process of a case where the context described with reference to the flowchart of Fig. 9 is set except that the method of calculating the loss function LLE is different, and thus the description thereof will be omitted.

### <<5. Second modification>>

In the above description, in a case where the context is set, the likelihood for the entire reconfigured content X' is used for the likelihood obtained by the likelihood evaluator 101. However, as illustrated in Fig. 11, a likelihood evaluator 101' may be provided instead of the likelihood evaluator 101, and the likelihood evaluator 101' may obtain, as a conditional likelihood CEL, likelihood from only partial data Y' which is other than the contexts C1 and C2 in the content X' and is changed to the likelihood desired by the creator.

Furthermore, in a case where the context is similarly set, as illustrated in Fig. 11, instead of the reality evaluator 102, a reality evaluator 102' which is generated by the same sequence generation model as that of the likelihood evaluator 101 and is substantially the same as the likelihood evaluator 101 may be provided, and the likelihood EL itself may be used as the reality ER.

As a result, the loss function is expressed as following Formula (7).
$\begin{matrix}LLE = F 1 - α \times F 2 \\ = {\left(CEL\left(X\left(init\right)′\right)-β\times ELinit\right)}^{2} \\ - α \times EL \left(X\left(init\right)′\right)\end{matrix}$ (7)

Here, CEL(X(init)') is the conditional likelihood of the content X(init)', β×ELinit is a reference likelihood, and EL(X(init)') is the likelihood of the content X(init)'.

Since the conditional likelihood is the likelihood of the partial data of the content X(init)' which changes according to the likelihood and thus represents "surprise", the reference likelihood is set with respect to the conditional likelihood, so that the content generated to make "surprise" larger or make "surprise" smaller can be adjusted.

Furthermore, since the reality evaluator 102' substantially functions as the likelihood evaluator 101, and thus the same sequence generation model is used for both the likelihood evaluator 101' and the reality evaluator 102', both can be aggregated into only the configuration of any one to simplify the configuration.

Moreover, in the second modification, an example is described in which the conditional likelihood CEL(X(init)') is used for the function F1, and the likelihood EL(X(init)') is used for the function F2 as the reality ER(X(init)'). However, the reality ER(X(init)') may be used for the function F2 by using the conditional likelihood CEL(X(init)') for the function F1.

Furthermore, similarly, the likelihood EL(X(init)') may be used instead of the reality ER(X(init)') of the function F2 in Formulas (3), (5), and (6) described above.

Note that the content generation process is similar to the process of a case where the context described with reference to the flowchart of Fig. 9 is set except that the method of calculating the loss function LLE is different, and thus the description thereof will be omitted.

### <<6. Example of execution by software>>

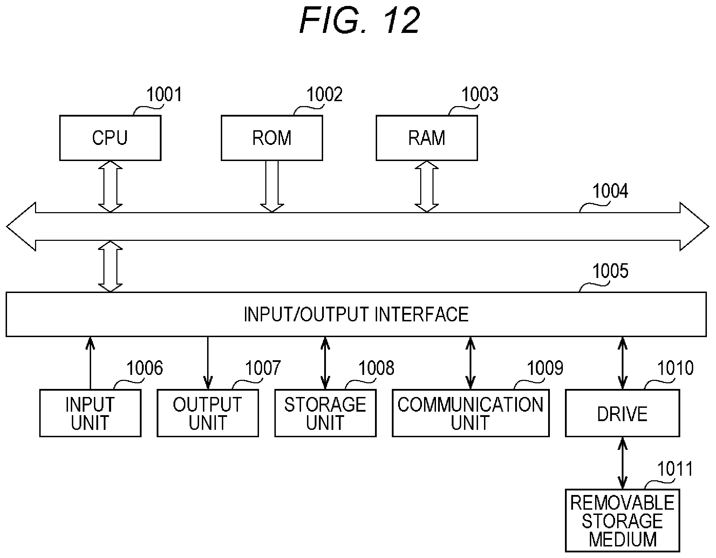

Fig. 12 illustrates a configuration example of a general-purpose computer. This personal computer has a built-in central processing unit (CPU) 1001. An input/output interface 1005 is connected to the CPU 1001 via a bus 1004. A read only memory (ROM) 1002 and a random access memory (RAM) 1003 are connected to the bus 1004.

The input/output interface 1005 is connected with an input unit 1006 configured by an input device such as a keyboard and a mouse for a user to input an operation command, an output unit 1007 which outputs a processing operation screen and an image of a processing result to a display device, a storage unit 1008 which includes a hard disk drive or the like for storing programs and various kinds of data, and a communication unit 1009 which includes a local area network (LAN) adapter or the like and executes communication processing via a network represented by the Internet. Furthermore, a drive 1010 which reads and writes data from and on a removable storage medium 1011 such as a magnetic disk (including a flexible disk), an optical disk (including a compact disc-read only memory (CD-ROM) and a digital versatile disc (DVD)), a magneto-optical disk (including a mini disc (MD)), and a semiconductor memory is connected.

The CPU 1001 executes various processes according to a program stored in the ROM 1002 or a program which is read from the removable storage medium 1011 such as a magnetic disk, an optical disk, a magneto-optical disk, or a semiconductor memory, is installed in the storage unit 1008, and is loaded from the storage unit 1008 into the RAM 1003. The RAM 1003 also appropriately stores data or the like necessary for the CPU 1001 to execute various processes.

In the computer configured as described above, the above-described series of processes are performed, for example, in such a manner that the CPU 1001 loads the program stored in the storage unit 1008 into the RAM 1003 via the input/output interface 1005 and the bus 1004 and executes the program.

For example, the program executed by the computer (CPU 1001) can be recorded and provided on the removable storage medium 1011 as a package medium and the like. Furthermore, the program can be provided via a wired or wireless transmission medium such as a local area network, the Internet, or digital satellite broadcasting.

In the computer, the program can be installed in the storage unit 1008 via the input/output interface 1005 by mounting the removable storage medium 1011 in the drive 1010. Furthermore, the program can be received by the communication unit 1009 and installed in the storage unit 1008 via a wired or wireless transmission medium. In addition, the program can be installed in advance in the ROM 1002 or the storage unit 1008.

Note that the program executed by the computer may be a program in which processing is performed in time series in the order described in this description or a program in which processing is performed in parallel or at a necessary timing such as when a call is made.

Note that the CPU 1001 in Fig. 12 implements the function of the control unit 52 in Fig. 2, and the storage unit 1008 implements the function of the storage unit 53 in Fig. 2.

Furthermore, in this description, the system means a set of a plurality of components (devices, modules (parts) and the like), and it does not matter whether or not all the components are in the same housing. Therefore, both a plurality of devices which is housed in separate housings and connected via a network and one device in which a plurality of modules is housed in one housing are the systems.

Note that the embodiment of the present disclosure is not limited to the above-described embodiments, and various modifications can be made without departing from the scope of the present disclosure.

For example, the present disclosure can be configured as cloud computing in which one function is shared by a plurality of devices via a network and jointly processed.

Furthermore, each step described in the above-described flowcharts can be executed by one device or shared by a plurality of devices.

Moreover, in a case where one step includes a plurality of processes, the plurality of processes included in the one step can be executed by one device or shared by a plurality of devices.

### REFERENCE SIGNS LIST

- 31: Information processing apparatus
- 32: Input/output device
- 51: Communication unit
- 52: Control unit
- 53: Storage unit
- 71: Learning unit
- 72: Optimization unit
- 73: Generation unit
- 81: Model storage unit
- 82: Music DB
- 91: Encoder
- 92: Decoder
- 93: Loss function calculation unit
- 101, 101': Likelihood evaluator
- 102, 102': Reality evaluator

## Claims

1. An information processing apparatus (31) comprising:
a model storage unit (81) configured to store a variational auto encoder, VAE,-learned encoder (91) and a VAE-learned decoder (92);
the encoder (91) and the decoder (92) being VAE-learned such that a posterior distribution is regularized by a prior distribution while keeping a reconfiguration error minimized;
the VAE-learned encoder (91) being configured to encode input music and/or image content including a sequence of data to convert the input music and/or image content into a latent variable;
the VAE-learned decoder (92) being configured to decode the latent variable to reconfigure output music and/or image content thereby generating the output music and/or image content as output data;
a loss function calculation unit (93) comprising a likelihood evaluator (101) that is configured to calculate a likelihood of the output music and/or image content reconfigured from the latent variable, the likelihood being a probability that the reconfigured content is content registered as a sample in advance, and a reality evaluator (102) that is configured to calculate a reality likelihood which is a likelihood of reality of the output music and/or image content re-configured from the latent variable, the reality evaluator (102) being configured to perform learning in advance on the basis of content including a sequence labeled with a real class including the content generated by a human and content including a sequence labeled with a fake class, the content of the fake class being obtained when a latent variable obtained from the prior distribution by the VAE is decoded by the decoder (92), the loss function calculation unit (93) being configured to calculate a loss function on the basis of the likelihood which is an evaluation result of the likelihood evaluator (101) and the reality likelihood which is an evaluation result of the reality evaluator (102), the loss function comprising a first term based on the likelihood of the output music and/or image content reconfigured from the latent variable and a second term based on the reality likelihood; and
a control unit (52) comprising a learning unit (71), an optimization unit (72), and a generation unit (73), the optimization unit (72) being controlled by the learning unit (71) to adjust and optimize parameters of the encoder (91) and the decoder (92), thereby defining a latent variable space, the generation unit (73) being configured to control the encoder (91) and the decoder (92) learned in advance, the generation unit (73) configured to update the latent variable by repeatedly moving a position of the latent variable in the latent variable space to lower a gradient of the calculated loss function, and
control the decoder (92) to decode the updated latent variable to reconfigure output music and/or image content, thereby generating the output music and/or image content as output data.

2. The information processing apparatus (31) according to claim 1, wherein
in a case where the control unit (52) lowers the gradient of the loss function to update the latent variable, the control unit (52) lowers the gradient of the loss function to update the latent variable such that the reality likelihood increases when the reality likelihood is smaller than a predetermined value, and controls the decoder (92) to decode the updated latent variable to reconfigure the output music and/or image content.

3. The information processing apparatus (31) according to claim 2, wherein
the control unit (52) lowers the gradient of the loss function and moves a position in the latent variable space to update the latent variable such that the reality likelihood increases when the reality likelihood is smaller than the predetermined value on a basis of a distribution of the likelihood for each latent variable in a latent variable space which is a space of the latent variable and a distribution of the reality likelihood, and controls the decoder (92) to decode the updated latent variable to reconfigure the output music and/or image content.

4. The information processing apparatus (31) according to claim 1, wherein
the likelihood evaluator (101) obtains, as a likelihood, a result obtained by logarithmizing a likelihood including a probability that the output music and/or image content reconfigured from the latent variable is music and/or image content registered as a sample in advance.

5. The information processing apparatus (31) according to claim 4, wherein
the likelihood evaluator (101) obtains a likelihood which is a probability that a sequence of the data configuring the output music and/or image content reconfigured from the latent variable is music and/or image content registered as a sample in advance, the likelihood being a result obtained by logarithmizing a likelihood obtained as a product of conditional probabilities for each sequence of the data.

6. The information processing apparatus (31) according to claim 1, wherein
the reality evaluator (102) obtains, as the reality likelihood, a result obtained by logarithmizing a likelihood of the reality including a probability that the output music and/or image content reconfigured from the latent variable is music and/or image content generated by a human.

7. The information processing apparatus (31) according to claim 1, wherein
the first term includes a square of a difference between the likelihood of the output music and/or image content reconfigured from the latent variable and a predetermined likelihood obtained by multiplying a predetermined constant by a predetermined coefficient.

8. The information processing apparatus (31) according to claim 7, wherein
the predetermined coefficient is set to a value larger than 1 when the likelihood of the output music and/or image content is increased to make the output music and/or image content common and is set to a value smaller than 1 when the likelihood of the output music and/or image content is decreased to make the output music and/or image content eccentric.

9. The information processing apparatus (31) according to claim 7, wherein
the predetermined constant is an initial value of the likelihood.

10. The information processing apparatus (31) according to claim 1, wherein
in the first term, a positive coefficient is assigned to the likelihood of the output music and/or image content reconfigured from the latent variable when the likelihood is increased, and a negative coefficient is assigned to the likelihood of the output music and/or image content when the likelihood is decreased.

11. The information processing apparatus (31) according to claim 1, wherein
the first term includes a sum of squares of differences between likelihoods of elements configuring the output music and/or image content reconfigured from the latent variable and a predetermined likelihood configured by a product of predetermined coefficient and constant of each element.

12. The information processing apparatus (31) according to claim 1, wherein
in a case where a part not to be changed in the input music and/or image content is designated as a context, the encoder (91) encodes a part other than the context in the input music and/or image content as input partial data and converts the input partial data into a latent variable,
the decoder (92) decodes the latent variable to reconfigure output partial data, and
the control unit (52) lowers a gradient of the loss function to update the latent variable, controls the decoder (92) to decode the updated latent variable to reconfigure output partial data, and integrates the reconfigured output partial data and the context to reconfigure output music and/or image content.

## Patentansprüche

1. Informationsverarbeitungseinrichtung (31), umfassend:
eine Modellspeichereinheit (81), die konfiguriert ist, um einen Variations-Autocodierer-erlernten Codierer, VAE-erlernten Codierer (91) und einen VAE-erlernten Decodierer (92) zu speichern;
wobei der Codierer (91) und der Decodierer (92) derart VAE-erlernt sind, dass eine Aposteriori-Verteilung durch eine Apriori-Verteilung geregelt wird, während ein Rekonfigurationsfehler minimiert gehalten wird;
wobei der VAE-erlernte Codierer (91) konfiguriert ist, um Eingabemusik- und/oder -bildinhalt zu codieren, der eine Datensequenz einschließt, um den Eingabemusik- und/oder -bildinhalt in eine latente Variable umzuwandeln;
wobei der VAE-erlernte Decodierer (92) konfiguriert ist, um die latente Variable zu decodieren, um Ausgabemusik- und/oder -Bildinhalt zu rekonfigurieren, wobei dadurch der Ausgabemusik- und/oder -Bildinhalt als Ausgabedaten erzeugt wird;
eine Verlustfunktionsberechnungseinheit (93), umfassend einen Wahrscheinlichkeitsauswerter (101), der konfiguriert ist, um eine Wahrscheinlichkeit des Ausgabemusik- und/oder Bildinhalts zu berechnen, der aus der latenten Variable rekonfiguriert wird, wobei die Wahrscheinlichkeit eine Wahrscheinlichkeit dafür ist, dass der rekonfigurierte Inhalt Inhalt ist, der im Voraus als eine Probe registriert ist, und einen Realitätsauswerter (102), der konfiguriert ist, um eine Realitätswahrscheinlichkeit zu berechnen, die eine Wahrscheinlichkeit einer Realität des Ausgabemusik- und oder -bildinhalts ist, der aus der latenten Variable rekonfiguriert ist, wobei der Realitätsauswerter (102) konfiguriert ist, um das Erlernen im Voraus auf der Basis von Inhalt durchzuführen, der eine Sequenz einschließt, die mit einer realen Klasse markiert ist, die den Inhalt, der durch einen Menschen erzeugt wird, und Inhalt, der eine Sequenz einschließt, die mit einer gefälschten Klasse markiert ist, einschließt, wobei der Inhalt der gefälschten Klasse erhalten wird, wenn eine latente Variable, die aus der Apriori-Verteilung durch den VAE erhalten wird, durch den Decodierer (92) decodiert wird, wobei die Verlustfunktionsberechnungseinheit (93) konfiguriert ist, um eine Verlustfunktion auf der Basis der Wahrscheinlichkeit, die ein Auswertungsergebnis des Wahrscheinlichkeitsbewerters (101) ist, und der Realitätswahrscheinlichkeit, die ein Auswertungsergebnis des Realitätsbewerters (102) ist, zu berechnen, die Verlustfunktion umfassend einen ersten Term, der auf der Wahrscheinlichkeit des Ausgabemusik- und/oder -bildinhalts basiert, der aus der latenten Variable rekonfiguriert wird, und einen zweiten Term, der auf der Realitätswahrscheinlichkeit basiert; und
eine Steuereinheit (52), umfassend eine Lerneinheit (71), eine Optimierungseinheit (72) und eine Erzeugungseinheit (73), wobei die Optimierungseinheit (72) durch die Lerneinheit (71) gesteuert wird, um Parameter des Codierers (91) und des Decodierers (92) anzupassen und zu optimieren, wobei dadurch ein Raum latenter Variablen definiert wird, wobei die Erzeugungseinheit (73) konfiguriert ist, um den Codierer (91) und den Decodierer (92) zu steuern, die im Voraus erlernt werden, wobei die Erzeugungseinheit (73) konfiguriert ist, um die latente Variable durch ein wiederholtes Bewegen einer Position der latenten Variable in dem Raum latenter Variablen zu aktualisieren, um einen Gradienten der berechneten Verlustfunktion zu senken, und
den Decodierer (92) zu steuern, um die aktualisierte latente Variable zu decodieren, um Ausgabemusik- und/oder -Bildinhalt zu rekonfigurieren, wobei dadurch der Ausgabemusik- und/oder -Bildinhalt als Ausgabedaten erzeugt wird.

2. Informationsverarbeitungseinrichtung (31) nach Anspruch 1, wobei
in einem Fall, in dem die Steuereinheit (52) den Gradienten der Verlustfunktion senkt, um die latente Variable zu aktualisieren, die Steuereinheit (52) den Gradienten der Verlustfunktion senkt, um die latente Variable derart zu aktualisieren, dass sich die Realitätswahrscheinlichkeit erhöht, wenn die Realitätswahrscheinlichkeit kleiner als ein vorbestimmter Wert ist, und den Decodierer (92) steuert, um die aktualisierte latente Variable zu decodieren, um den Ausgabemusik- und/oder -bildinhalt zu rekonfigurieren.

3. Informationsverarbeitungseinrichtung (31) nach Anspruch 2, wobei
die Steuereinheit (52) den Gradienten der Verlustfunktion senkt und eine Position in dem Raum latenter Variablen bewegt, um die latente Variable derart zu aktualisieren, dass sich die Realitätswahrscheinlichkeit erhöht, wenn die Realitätswahrscheinlichkeit kleiner als der vorbestimmte Wert ist, auf einer Basis einer Verteilung der Wahrscheinlichkeit für jede latente Variable in einem Raum latenter Variablen, der ein Raum der latenten Variablen ist, und einer Verteilung der Realitätswahrscheinlichkeit, und den Decodierer (92) steuert, um die aktualisierte latente Variable zu decodieren, um den Ausgabemusik- und/oder - bildinhalt zu rekonfigurieren.

4. Informationsverarbeitungseinrichtung (31) nach Anspruch 1, wobei
der Wahrscheinlichkeitsauswerter (101) ein Ergebnis, als eine Wahrscheinlichkeit, erhält, das durch ein Logarithmieren einer Wahrscheinlichkeit erhalten wird, die eine Wahrscheinlichkeit einschließt, dass der Ausgabemusik- und/oder -bildinhalt, der aus der latenten Variable rekonfiguriert wird, ein Musik- und/oder Bildinhalt ist, der im Voraus als eine Probe registriert ist.

5. Informationsverarbeitungseinrichtung (31) nach Anspruch 4, wobei
der Wahrscheinlichkeitsauswerter (101) eine Wahrscheinlichkeit erhält, die eine Wahrscheinlichkeit dafür ist, dass eine Datensequenz, die den Ausgabemusik- und/oder -bildinhalt konfiguriert, der aus der latenten Variable rekonfiguriert ist, ein Musik- und/oder -bildinhalt ist, der im Voraus als eine Probe registriert ist, wobei die Wahrscheinlichkeit ein Ergebnis ist, das durch das Logarithmieren einer Wahrscheinlichkeit erhalten wird, die als ein Produkt von bedingten Wahrscheinlichkeiten für jede Sequenz der Daten erhalten wird.

6. Informationsverarbeitungseinrichtung (31) nach Anspruch 1, wobei
der Realitätsauswerter (102) ein Ergebnis, als die Realitätswahrscheinlichkeit, erhält, das durch das Logarithmieren einer Wahrscheinlichkeit der Realität erhalten wird, die eine Wahrscheinlichkeit einschließt, dass der Ausgabemusik- und/oder -bildinhalt, der aus der latenten Variable rekonfiguriert wird, Musik- und/oder Bildinhalt ist, der durch einen Menschen erzeugt wird.

7. Informationsverarbeitungseinrichtung (31) nach Anspruch 1, wobei
der erste Term ein Quadrat einer Differenz zwischen der Wahrscheinlichkeit des Ausgabemusik- und/oder -bildinhalts, der aus der latenten Variable rekonfiguriert ist, und einer vorbestimmten Wahrscheinlichkeit, die durch ein Multiplizieren einer vorbestimmten Konstante mit einem vorbestimmten Koeffizienten erhalten wird.

8. Informationsverarbeitungseinrichtung (31) nach Anspruch 7, wobei
der vorbestimmte Koeffizient auf einen Wert größer als 1 eingestellt ist, wenn die Wahrscheinlichkeit des Ausgabemusik- und/oder -bildinhalts erhöht wird, um den Ausgabemusik- und/oder -bildinhalt gemein zu machen, und auf einen Wert kleiner als 1 eingestellt ist, wenn die Wahrscheinlichkeit des Ausgabemusik- und/oder -bildinhalts verringert wird, um den Ausgabemusik- und/oder -bildinhalt exzentrisch zu machen.

9. Informationsverarbeitungseinrichtung (31) nach Anspruch 7, wobei
die vorbestimmte Konstante ein Anfangswert der Wahrscheinlichkeit ist.

10. Informationsverarbeitungseinrichtung (31) nach Anspruch 1, wobei
in dem ersten Term der Wahrscheinlichkeit des Ausgabemusik- und/oder - bildinhalts, der aus der latenten Variable rekonfiguriert wird, ein positiver Koeffizient zugewiesen wird, wenn die Wahrscheinlichkeit erhöht wird, und der Wahrscheinlichkeit des Ausgabemusik- und/oder -bildinhalts ein negativer Koeffizient zugewiesen wird, wenn die Wahrscheinlichkeit verringert wird.

11. Informationsverarbeitungseinrichtung (31) nach Anspruch 1, wobei
der erste Term eine Summe von Quadraten von Differenzen zwischen Wahrscheinlichkeiten von Elementen einschließt, die den Ausgabemusik- und/oder -bildinhalt konfigurieren, der aus der latenten Variable rekonfiguriert wird, und einer vorbestimmten Wahrscheinlichkeit, die durch ein Produkt aus einem vorbestimmten Koeffizienten und einer Konstante jedes Elements konfiguriert ist.

12. Informationsverarbeitungseinrichtung (31) nach Anspruch 1, wobei
in einem Fall, in dem ein nicht zu ändernder Teil in dem Eingabemusik- und/oder -bildinhalt als ein Kontext festgelegt wird, der Codierer (91) einen anderen Teil als den Kontext in dem Eingabemusik- und/oder -bildinhalt als Eingabeteildaten codiert und die Eingabeteildaten in eine latente Variable umwandelt,
der Decodierer (92) die latente Variable decodiert, um Ausgabeteildaten zu rekonfigurieren, und
die Steuereinheit (52) einen Gradienten der Verlustfunktion senkt, um die latente Variable zu aktualisieren, den Decoder (92) steuert, um die aktualisierte latente Variable zu decodieren, um Ausgabeteildaten zu rekonfigurieren, und die rekonfigurierten Ausgabeteildaten und den Kontext integriert, um Ausgabemusik- und/oder -bildinhalt zu rekonfigurieren.

## Revendications

1. Appareil de traitement d'informations (31) comprenant :
une unité de stockage de modèle (81) configurée pour stocker un encodeur appris par auto-encodeur variationnel, VAE, (91) et un décodeur appris par VAE (92) ;
l'encodeur (91) et le décodeur (92) étant appris par VAE de telle sorte qu'une distribution a posteriori est régularisée par une distribution a priori tout en maintenant une erreur de reconfiguration minimisée ;
l'encodeur appris par VAE (91) étant configuré pour encoder un contenu de musique et/ou d'image d'entrée comportant une séquence de données pour convertir le contenu de musique et/ou d'image d'entrée en une variable latente ;
le décodeur appris par VAE (92) étant configuré pour décoder la variable latente pour reconfigurer le contenu de musique et/ou d'image de sortie générant de ce fait le contenu de musique et/ou d'image de sortie en tant que données de sortie ;
une unité de calcul de fonction de perte (93) comprenant un évaluateur de vraisemblance (101) qui est configuré pour calculer une vraisemblance du contenu de musique et/ou d'image de sortie reconfiguré à partir de la variable latente, la vraisemblance étant une probabilité que le contenu reconfiguré soit un contenu enregistré en tant qu'échantillon à l'avance, et un évaluateur de réalité (102) qui est configuré pour calculer une vraisemblance de réalité qui est une vraisemblance de réalité du contenu de musique et/ou d'image de sortie reconfiguré à partir de la variable latente, l'évaluateur de réalité (102) étant configuré pour effectuer un apprentissage à l'avance sur la base d'un contenu comportant une séquence étiquetée avec une classe réelle comportant le contenu généré par un humain et d'un contenu comportant une séquence étiquetée avec une classe feinte, le contenu de la classe feinte étant obtenu lorsqu'une variable latente obtenue à partir de la distribution a priori par le VAE est décodée par le décodeur (92), l'unité de calcul de fonction de perte (93) étant configurée pour calculer une fonction de perte sur la base de la vraisemblance qui est un résultat d'évaluation de l'évaluateur de vraisemblance (101) et de la vraisemblance de réalité qui est un résultat d'évaluation de l'évaluateur de réalité (102), la fonction de perte comprenant un premier terme basé sur la vraisemblance du contenu de musique et/ou d'image de sortie reconfiguré à partir de la variable latente et un second terme basé sur la vraisemblance de réalité ; et
une unité de commande (52) comprenant une unité d'apprentissage (71), une unité d'optimisation (72), et une unité de génération (73), l'unité d'optimisation (72) étant commandée par l'unité d'apprentissage (71) pour ajuster et optimiser des paramètres de l'encodeur (91) et du décodeur (92), définissant de ce fait un espace de variable latente, l'unité de génération (73) étant configurée pour commander l'encodeur (91) et le décodeur (92) appris à l'avance, l'unité de génération (73) étant configurée pour mettre à jour la variable latente en déplaçant de manière répétée une position de la variable latente dans l'espace de variable latente pour abaisser un gradient de la fonction de perte calculée, et
commander le décodeur (92) pour décoder la variable latente mise à jour pour reconfigurer le contenu de musique et/ou d'image de sortie, générant de ce fait le contenu de musique et/ou d'image de sortie en tant que données de sortie.

2. Appareil de traitement d'informations (31) selon la revendication 1, dans lequel
dans un cas où l'unité de commande (52) abaisse le gradient de la fonction de perte pour mettre à jour la variable latente, l'unité de commande (52) abaisse le gradient de la fonction de perte pour mettre à jour la variable latente de telle sorte que la vraisemblance de réalité augmente lorsque la vraisemblance de réalité est inférieure à une valeur prédéterminée, et commande le décodeur (92) pour décoder la variable latente mise à jour pour reconfigurer le contenu de musique et/ou d'image de sortie.

3. Appareil de traitement d'informations (31) selon la revendication 2, dans lequel
l'unité de commande (52) abaisse le gradient de la fonction de perte et déplace une position dans l'espace de variable latente pour mettre à jour la variable latente de telle sorte que la vraisemblance de réalité augmente lorsque la vraisemblance de réalité est inférieure à la valeur prédéterminée sur la base d'une distribution de la vraisemblance pour chaque variable latente dans un espace de variable latente qui est un espace de la variable latente et d'une distribution de la vraisemblance de réalité, et commande le décodeur (92) pour décoder la variable latente mise à jour pour reconfigurer le contenu de musique et/ou d'image de sortie.

4. Appareil de traitement d'informations (31) selon la revendication 1, dans lequel
l'évaluateur de vraisemblance (101) obtient, en tant que vraisemblance, un résultat obtenu en appliquant le logarithme à une vraisemblance comportant une probabilité que le contenu de musique et/ou d'image de sortie reconfiguré à partir de la variable latente soit un contenu de musique et/ou d'image enregistré à l'avance en tant qu'échantillon.

5. Appareil de traitement d'informations (31) selon la revendication 4, dans lequel
l'évaluateur de vraisemblance (101) obtient une vraisemblance qui est une probabilité qu'une séquence des données configurant le contenu de musique et/ou d'image de sortie reconfiguré à partir de la variable latente soit un contenu de musique et/ou d'image enregistré à l'avance en tant qu'échantillon, la vraisemblance étant un résultat obtenu en appliquant le logarithme à une vraisemblance obtenue en tant que produit de probabilités conditionnelles pour chaque séquence des données.

6. Appareil de traitement d'informations (31) selon la revendication 1, dans lequel
l'évaluateur de réalité (102) obtient, en tant que vraisemblance de réalité, un résultat obtenu en appliquant le logarithme à une vraisemblance de la réalité comportant une probabilité que le contenu de musique et/ou d'image de sortie reconfiguré à partir de la variable latente soit un contenu de musique et/ou d'image généré par un humain.

7. Appareil de traitement d'informations (31) selon la revendication 1, dans lequel
le premier terme comporte un carré d'une différence entre la vraisemblance du contenu de musique et/ou d'image de sortie reconfiguré à partir de la variable latente et une vraisemblance prédéterminée obtenue en multipliant une constante prédéterminée par un coefficient prédéterminé.

8. Appareil de traitement d'informations (31) selon la revendication 7, dans lequel
le coefficient prédéterminé est fixé à une valeur supérieure à 1 lorsque la vraisemblance du contenu de musique et/ou d'image de sortie est augmentée pour rendre le contenu de musique et/ou d'image de sortie commun et est fixé à une valeur inférieure à 1 lorsque la vraisemblance du contenu de musique et/ou d'image de sortie est diminuée pour rendre le contenu de musique et/ou d'image de sortie excentrique.

9. Appareil de traitement d'informations (31) selon la revendication 7, dans lequel
la constante prédéterminée est une valeur initiale de la vraisemblance.

10. Appareil de traitement d'informations (31) selon la revendication 1, dans lequel
dans le premier terme, un coefficient positif est attribué à la vraisemblance du contenu de musique et/ou d'image de sortie reconfiguré à partir de la variable latente lorsque la vraisemblance est augmentée, et un coefficient négatif est attribué à la vraisemblance du contenu de musique et/ou d'image de sortie lorsque la vraisemblance est diminuée.

11. Appareil de traitement d'informations (31) selon la revendication 1, dans lequel
le premier terme comporte une somme de carrés de différences entre des vraisemblances d'éléments configurant le contenu de musique et/ou d'image de sortie reconfiguré à partir de la variable latente et une vraisemblance prédéterminée configurée par un produit de coefficient et de constante prédéterminés de chaque élément.

12. Appareil de traitement d'informations (31) selon la revendication 1, dans lequel
dans un cas où une partie ne devant pas être modifiée dans le contenu de musique et/ou d'image d'entrée est désignée en tant que contexte, l'encodeur (91) code une partie autre que le contexte dans le contenu de musique et/ou d'image d'entrée en tant que données partielles d'entrée et convertit les données partielles d'entrée en une variable latente,
le décodeur (92) décode la variable latente pour reconfigurer les données partielles de sortie, et
l'unité de commande (52) abaisse un gradient de la fonction de perte pour mettre à jour la variable latente, commande le décodeur (92) pour décoder la variable latente mise à jour pour reconfigurer des données partielles de sortie, et intègre les données partielles de sortie reconfigurées et le contexte pour reconfigurer un contenu de musique et/ou d'image de sortie.
